# EUROPÄISCHE PATENTSCHRIFT

(11) **EP 1 233 425 B1**
(45) Veröffentlichungstag und Bekanntmachung des Hinweises auf die Patenterteilung: **15.11.2006**
(21) Anmeldenummer: 01103885.8
(22) Anmeldetag: 16.02.2001
(51) Int. Cl.: G21C 23/00

(54) **Kernreaktor, insbesondere Forschungs- oder Versuchsreaktor**
Nuclear reactor, in particular research or test reactor
Réacteur nucléaire, notamment réacteur de recherche ou d'essai

(43) Veröffentlichungstag der Anmeldung: 21.08.2002
(73) Patentinhaber: Framatome ANP GmbH, 91058 Erlangen (DE)
(72) Erfinder: Roegler, Hans-Joachim, 53125 Bonn (DE)
(74) Vertreter: Tergau & Pohl Patentanwälte

(56) Entgegenhaltungen:
- GB-A- 2 119 157
- US-A- 2 982 710
- US-A- 5 324 331
- PATENT ABSTRACTS OF JAPAN vol. 017, no. 428, 8. September 1993 (1993-09-08) & JP 05 087996 A (SUMITOMO MEATL IND LTD ET AL.)
- PATENT ABSTRACTS OF JAPAN vol. 1999, no. 10, 31. August 1999 (1999-08-31) & JP 11 142586 A (MITSUBISHI HEAVY IND LTD)
- PATENT ABSTRACTS OF JAPAN vol. 2000, no. 07, 29. September 2000 (2000-09-29) & JP 2000 111690 A (JAPAN NUCLEAR CYCLE DEVELOPMENT INST STATES OF PROJECTS)

## Beschreibung

Die Erfindung betrifft einen Kernreaktor mit einem Reaktorkern, der in einem von einem Reflektortank umgebenen Strömungskanal für ein Kühlmittel angeordnet ist, wobei in den Reflektortank eine Anzahl von Probenkammern integriert ist.

Ein derartiger Kernreaktor kann insbesondere zum Einsatz als Forschungs- oder Versuchsreaktor vorgesehen sein. Im Unterschied zu einem sogenannten Leistungsreaktor, der im wesentlichen für eine kontinuierliche Erzeugung vergleichsweise großer Mengen an elektrischer Leistung im Dauerbetrieb ausgelegt ist, wird ein derartiger Forschungs- oder Versuchsreaktor zur Durchführung weiterer Aufgaben wie beispielsweise Bestrahlungsexperimenten, Erzeugung von Radioisotopen oder anderen experimentellen Zwecken dienen. Der Forschung- oder Versuchsreaktor ist dabei üblicherweise im Vergleich zu einem Leistungsreaktor für eine deutlich geringere Nennleistung ausgelegt und dementsprechend auch in seinen räumlichen Ausdehnungen entsprechend geringer dimensioniert. Er arbeitet darüberhinaus mit vergleichsweise niedrigen Drücken und Temperaturen.

Der Forschungs- oder Versuchsreaktor umfaßt dabei üblicherweise einen sogenannten Reaktorkern, in dem spaltbares Material vorgehalten und bedarfsweise der Spaltung durch einer kontrollierten Kettenreaktion unterzogen wird. Infolge der dabei auftretenden Abbrandes eines Teils des spaltbaren Materials wird einerseits Energie freigesetzt, die durch geeignete Kühlung abgeführt wird. Andererseits entstehen neben weiteren Spaltprodukten bei der Spaltung aber auch Neutronen, die entweder zur Aufrechterhaltung der Kettenreaktion im Reaktorkern oder auch für Bestrahlungsexperimente in einem Raumbereich außerhalb des eigentlichen Reaktorkerns herangezogen werden.

Für die Aufrechterhaltung der Kettenreaktion im Reaktorkern ist die Bereitstellung einer ausreichenden Flußdichte an Neutronen erforderlich. Aufgrund der vergleichsweise geringen räumlichen Ausdehnung des Reaktorkerns eines Forschungs- oder Versuchsreaktors im Vergleich zu einem Leistungsreaktor ist bei der Erstellung der Neutronenbilanz der Verlust an Neutronen durch den äußeren Rand des Reaktorkerns in einem vergleichsweise höherem Maße zu berücksichtigen. Der Neutronenverlust im Randbereich des Reaktorkerns ist gerade bei einem vergleichsweise gering ausgedehnten Reaktorkern signifikant, so daß bei derartig gering ausgedehnten Reaktorkernen üblicherweise ihre Einbettung in sogenanntes Reflektormaterial vorgesehen ist. Dazu ist beispielsweise der Reaktorkern, der zu Kühlzwecken häufig in einem Strömungskanal für ein Kühlmittel angeordnet ist, innerhalb eines den Strömungskanal umgebenden Reflektortanks positioniert, der mit einem sogenannten Reflektormaterial befüllt ist. Das Reflektormaterial dient dabei dazu, die aus dem Reaktorkern in seinen Außenbereich abgegebenen Neutronen teilweise zu reflektieren und diese somit in den räumlichen Bereich des eigentlichen Reaktorkerns zurückzuverbringen. Zu diesem Zweck werden als Reflektormaterialien üblicherweise Materialien mit geeignetem Wirkungsquerschnitt für die Reflektion von Neutronen ausgewählt, wobei insbesondere schweres Wasser (D₂O) günstige Eigenschaften aufweist.

Für die Herstellung von Radioisotopen zu Forschungszwecken oder zur Erzeugung anderer Kernreaktion sowie zur Durchführung anderer Bestrahlungsexperimente mit aus dem Reaktorkern austretenden Neutronen sind im Umgebungsbereich des Reaktorkerns bei einem Forschungs- oder Versuchsreaktor üblicherweise eine Anzahl von Probenkammern angeordnet. Jede dieser Probenkammern ist dabei mit einer oder mehrerer Bestrahlungsprobe(n) beschickbar, die unter vorgebbaren Versuchsbedingungen ein Bestrahlung mit aus dem Reaktorkern austretenden Neutronen ausgesetzt werden kann. Um dabei auch bei einem von einem Reflektortank umgebenen Reaktorkern eine ausreichend hohe, durch die abschirmende Wirkung des Reflektormaterials nicht zu stark abgeschwächte Neutronenflußdichte am Probenort sicherzustellen, sind die Probenkammern dabei üblicherweise unmittelbar in den Reaktorkern oder an geeigneter Stelle in den Reflektortank integriert.

Durch die nuklearen Prozesse, die infolge der Bestrahlung der Proben in den Probenkammern üblicherweise ablaufen, wird in der Regel Wärme freigesetzt. Daher ist einerseits aus Sicherheitsgründen und andererseits zur gezielten Einhaltung der Experimental- oder Versuchsbedingungen üblicherweise eine Kühlung der Proben in den Probenkammern erforderlich. Dazu ist die oder jede Probenkammer üblicherweise in einen Kühlmittelkanal geschaltet und über diesen mit einem Kühlmittel bespeisbar. Der der jeweiligen Probenkammer zugeordnete Kühlmittelkanal ist dabei üblicherweise im Zwangsdurchlauf betrieben, wobei zur Aufrechterhaltung der Durchströmung des Kühlmittelkanals entsprechende Pumpen oder Pumpstationen vorgesehen sind. Ein derartiges Konzept zur Kühlung der Proben in den Probenkammern ist jedoch vergleichsweise aufwendig und zudem störanfällig. Die alternative Kühlung durch reine Naturkonvention, die auch praktiziert wird, ist in vielen Fällen nicht hinreichend.

Der Erfindung liegt daher die Aufgabe zugrunde, einen Kernreaktor der oben genannten Art anzugeben, bei dem mit besonders geringem Aufwand eine zuverlässige und sichere Kühlung der Proben in den Probenkammern gewährleistet ist.

Diese Aufgabe wird erfindungsgemäß dadurch gelöst, dass die Probenkammern jeweils über einen zugeordneten Zweigkanal mit einem Kühlmittel bespeisbar sind, wobei der oder jeder Zweigkanal eingangsseitig mit einem Zuströmbereich und ausgangsseitig mit einem Abströmbereich des den Reaktorkern umgebenden Strömungskanals kommuniziert.

Die Erfindung geht dabei von der Überlegung aus, dass mit einfachen Mitteln eine sichere und zuverlässige Kühlung der Proben in den Probenkammern, die in allen Betriebszuständen des Reaktors greift, erreichbar ist, indem die Kühlung der Probenkammern in der Art eines passiven Systems, also unter weitest möglichem Verzicht auf aktive Komponenten, ausgestaltet ist. Ein derartig passives System ist durch die kühlmittelseitige Ankopplung der Probenkammern an das ohnehin zur Kühlung des Reaktorkerns vorgesehene Strömungssystem erreichbar. Demzufolge wird zur Einstellung oder Aufrechterhaltung der Durchströmung der Probenkammern mit Kühlmittel die im Kühlmittelstrang vorhandene Druckdifferenz über den Reaktorkern genutzt. Zur Nutzung dieser Druckdifferenz in der Art eines Pumpeffekts für die jeweilige Probenkammer ist die Probenkammer in der Art eines Bypasses oder einer Umführung kühlmittelseitig parallel zum Reaktorkern geschaltet. Die Erfindung nutzt dabei unter anderem die Erkenntnis, daß durch eine derartige Ankopplung in sämtlichen Betriebszuständen des Kernreaktors eine bedarfsgerechte Bespeisung der Probenkammern mit Kühlmitteln sichergestellt ist: nur wenn nämlich der Reaktorkern im Betrieb ist und somit seine Zwangsbeaufschlagung mit Kühlmittel ohnehin sichergestellt werden muß und wird, erfolgt auch eine Bestrahlung der Proben in den Probenkammern, die ihrerseits zur Freisetzung von Wärme in den Probenkammern und somit zu einem Bedarf an Kühlung führt. In diesem Fall werden die Probenkammern auch parallel zum Reaktorkern mit Kühlmittel versorgt. Wenn andererseits der Reaktorkern nicht in Betrieb ist, kann ein Kühlbedarf beispielsweise durch dessen Nachzerfallswärme bestehen. Dabei stellt sich eine konvektive Kühlung des Reaktorkerns ohne die aktive Beaufschlagung mit Kühlmittel ein, deren Druckabfall über den Kern zur Erzeugung einer Kühlung der eine vergleichsweise geringe Wärmemenge entfaltenden Proben in den Probenkammern zur Verfügung steht. Falls der Reaktorkern hingegen gänzlich ungekühlt bleiben kann, so fällt auch infolge mangelnder Bestrahlung kein Kühlbedarf für die Proben in den Probenkammern an.

Ein derartig ausgestalteter Kernreaktor eignet sich besonders zur Verwendung als Forschungs- oder als Versuchsreaktor.

Zur Sicherstellung einer ausreichend hohen Neutronenflußdichte im Bereich des eigentlichen Reaktorkerns und der mit Probematerial beschickten Probekammern ist der Reflektortank vorteilhafterweise mit einem Reflektormaterial befüllt. Als Reflektormaterial kann dabei jedes Material vorgesehen sein, das aufgrund seiner Wirkungsquerschnitte für Neutronen eine Abbremsung und eine ausreichende Reflexion der aus dem Reaktorkern abströmenden Neutronen in diesen zurück gewährleistet. Insbesondere kann als Reflektormaterial Graphit, Beryllium oder leichtes Wasser (H₂O) vorgesehen sein; vorzugsweise ist als Reflektormaterial jedoch schweres Wasser (D₂O), insbesondere in flüssiger Form, vorgesehen.

Durch die kühlmittelseitige Parallelschaltung der den Probenkammern zugeordneten Zweigkanäle zu dem dem Reaktorkern zugeordneten Strömungskanal teilt sich der Kühlmittelstrom über die Gesamtheit dieser Kanäle auf. Das Verzweigungs- oder Aufteilungsverhältnis ist dabei im wesentlichen bestimmt durch die Dimensionierung oder die geometrischen Verhältnisse der einzelnen Kanäle, insbesondere die Kanalquerschnitte. Um in jedem Fall eine ausreichende und bedarfsgerechte Kühlung einer Probe in einer Probenkammer sicherzustellen, ist die Dimensionierung, insbesondere der Strömungswiderstand, des der jeweiligen Probenkammer zugeordneten Zweigkanals vorteilhafterweise im Verhältnis zum Strömungskanal und zur Pumpleistung einer diesem zugeordneten Kühlmittelpumpe an einen maximal zu erwartenden Kühlmittelbedarf in der jeweiligen Probenkammer angepaßt.

In weiterer oder alternativer vorteilhafter Ausgestaltung ist dem oder jedem Zweigkanal jeweils ein einstellbares Drosselorgan zugeordnet. Über das Drosselorgan ist dabei eine bedarfs- oder beladungsabhängige Beaufschlagung der jeweiligen Probe mit Kühlmittel ermöglicht, wobei die zur Verfügung gestellte Kühlleistung als weiterer Freiheitsgrad, beispielsweise bei der Durchführung von Versuchen oder Experimenten, nutzbar ist. Das Drosselorgan kann dabei fest installiert oder auch austauschbar sein.

Um einerseits eine Beschickung der jeweiligen Probenkammer mit den zu untersuchenden Proben auf besonders einfache Weise zu ermöglichen und andererseits eine besonders flexible Anpassung der Dimensionierung des jeweiligen Zweigkanals im Verhältnis zum Strömungskanal zu ermöglichen, ist der oder jeder Zweigkanal in besonders vorteilhafter Ausgestaltung zweiteilig ausgeführt. In einem ersten Teil umfaßt der Zweigkanal dabei die eigentliche Probenkammer, die in ihren Ausdehnungen an die zu erwartenden Ausdehnungen der aufzunehmenden Probe angepaßt ist. Dieser die eigentliche Probenkammer umfassende Teil kann dabei unter Beibehaltung eines durchgängig vergleichsweise großen Querschnitts topfartig ausgestaltet sein, wobei der Topfboden zur Aufnahme der Probe dient, und wobei der Topfrand unter Belassung einer Beschickungsöffnung mit dem oberen Deckel des Reflektortanks verbunden ist. Diesem ersten Teil des Zweigkanals ist kühlmittelseitig ein zweiter Teil nachgeschaltet, der eine im Querschnitt im Vergleich zur jeweiligen Probenkammer verengte Kühlmittelleitung umfaßt. Durch den ersten Teil ist dabei eine sichere und belastbare Probenaufnahme gewährleistet, wobei die Dimensionierung in strömungstechnischer Hinsicht durch eine geeignete Querschnittswahl der im zweiten Teil vorgesehenen Kühlmittelleitung mittels ihres Strömungswiderstands erfolgt.

In weiterer vorteilhafter Ausgestaltung ist die oder jede Kühlmittelleitung dabei gekrümmt geführt. Bei einer derartig gekrümmt geführten Kühlmittelleitung erfolgt nämlich eine Eliminierung thermischer und mechanischer Spannungen, wobei eine derartig gekrümmte Kühlmittelleitung die eigentlichen Proben mechanisch vom nachgeschalteten Rohrleitungsbereich entkoppelt. Auch thermische Spannungen sind dabei besonders sicher vermieden, zumal die gekrümmte Kühlmittelleitung eine Kompensation thermischer Ausdehnungen ohne Beeinträchtigungen weiterer Komponenten ermöglicht.

Die mit der Erfindung erzielten Vorteile bestehen insbesondere darin, daß durch die zum Reaktorkern zugeordneten Strömungskanal kühlmittelseitig parallel geschalteten Zweigkanäle eine zuverlässige Bespeisung der Probenkammern in der Art eines passiven Systems erfolgt. Die Durchströmung der Probenkammern wird dabei durch das über dem Reaktorkern hinweg aufrechterhaltene Druckgefälle sichergestellt. Gerade durch die Verwendung der der Probenkammer kühlmittelseitig nachgeschalteten Kühlmittelleitungen ist zudem bei einem derartigen Konzept eine besonders hohe mechanische und thermische Belastbarkeit sichergestellt. Die zweiteilige Ausgestaltung der Zweigkanäle durch die Kombination der topfartig ausgebildeten Probenkammer mit der nachgeschalteten, vergleichsweise dünnen Kühlmittelleitung ermöglicht zudem eine sichere Unterbringung der Proben bei nur geringem Platzbedarf im Reflektortank, so daß noch vergleichsweise viel Volumen zur Aufnahme des Reflektors zur Verfügung steht.

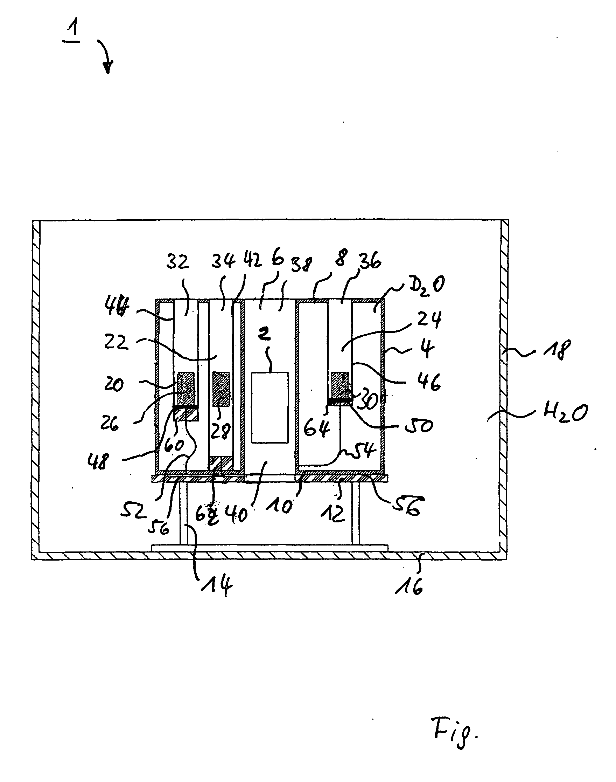

Ein Ausführungsbeispiel der Erfindung wird anhand einer Zeichnung näher erläutert. Darin zeigt die Figur ausschnittsweise einen Kernreaktor im vertikalen Schnitt.

Der Kernreaktor 1 gemäß der Figur ist als Forschungs- oder Versuchsreaktor ausgestaltet. Er umfaßt einen Reaktorkern 2, in dem spaltbares Material als Kernbrennstoff vorgehalten ist. Im Reaktorkern 2 wird dabei eine kontrollierte Kettenreaktion unter Erzeugung von freien Neutronen unter Freisetzung von Energie und aufrechterhalten. Infolge seiner Ausgestaltung als Forschungs- oder Versuchsreaktor ist der Kernreaktor 1 für eine vergleichsweise geringe thermische Nennleistung von 1 - 100 MW ausgelegt. Der Reaktorkern 2 ist in diesen Fällen, bezogen auf diese Nennleistung, räumlich vergleichsweise gering ausgedehnt. Um den signifikanten Neutronenverlust durch die Oberfläche des Reaktorkerns 2 zu begrenzen, ist der Reaktorkern 2 von einem Reflektortank 4 umgeben. Der Reflektortank 4 ist dabei mit schweren Wasser (D₂O) als Reflektormaterial gefüllt, das eine zumindest teilweise Reflexion von aus den Reaktorkern 2 austretenden Neutronen in diesen zurück bewirkt.

Für einen sicheren und kontrollierbaren Betrieb ist der Reaktorkern 2 kühlbar ausgebildet. Er ist dazu innerhalb eines Strömungskanals 6 für Kühlmittel angeordnet, der den Reflektortank 4 zentrisch durchdringt. Der Strömungskanal 6 weist dabei im Ausführungsbeispiel einen kreisförmigen Querschnitt auf; es können aber auch andere Querschnitte wie beispielsweise ein quadratischer oder rechteckiger Querschnitt vorgesehen sein.

Der Reflektortank 4, der oberseitig mit einem Deckelflansch 8 verschlossen ist, ruht mit seinem Tankboden 10 auf einem Trägerflansch 12. Der Trägerflansch 12 wiederum ist über ein Traggerüst 14 auf dem Boden 16 eines Wasserbeckens 18 abgestützt, das den Reflektortank 4 vollständig umgibt. Das Wasserbecken 18 ist dabei mit leichtem Wasser (H₂O) gefüllt.

Der Kernreaktor 1 dient unter anderem dazu, Versuche oder Experimente oder Kernreaktionen durch Bestrahlung von Proben mit Neutronen durchzuführen. Dazu sind dem Reaktorkern 2 eine Anzahl von Probenkammern 20, 22, 24 zugeordnet, die mit Proben 26, 28, 30 beschickbar sind. Die Proben 26, 28, 30 können dabei sogenannte Targets oder Kapseln oder Ingots oder auch andere Bestrahlungsproben sein. Die Probenkammern 20, 22, 24 sind räumlich in einem Bereich angeordnet, in dem eine für die Durchführung von Bestrahlungen ausreichend hohe Neutronenflußdichte vorliegt. Dazu sind die Probenkammern 20, 22, 24 an geeigneter Position in den Reflektortank 4 integriert.

Bei der Bestrahlung der Proben 26, 28, 30 mit Neutronen aus dem Reaktorkern 2 können versuchsspezifische Aktivierungs-, Umwandlungs- Spalt- oder Zerfallsprozesse in den Proben 26, 28, 30 angeregt oder ausgelöst werden. Eine derartige Bestrahlung ist mit einer Freisetzung von Wärme durch die jeweilige Probe 26, 28, 30 verbunden. Aus Sicherheitsgründen, aber auch für eine zuverlässige Einhaltung vorgegebener Versuchsbedingungen, sind die Probenkammern 20, 22, 24 daher für eine Abführung der bei der Bestrahlung der Proben 26, 28, 30 freigesetzten Wärme und somit kühlbar ausgestaltet. Dabei ist für die Kühlung der Probenkammern 20, 22, 24 ein seiner Art nach passives System unter Verzicht auf aktive und somit zu überwachende und auch störanfällige Komponenten vorgesehen. Dafür ist jeder Probenkammer 20, 22, 24 jeweils ein Zweigkanal 32, 34 bzw. 36 zugeordnet, über den die jeweilige Probenkammer 20, 22, 24 mit Kühlmittel bespeisbar ist.

Für ein im wesentlichen passives Kühlkonzept sind die Zweigkanäle 32, 34, 36 dabei jeweils eingangsseitig mit einem Zuströmbereich 38 und ausgangsseitig mit einem Abströmbereich 40 des dem Reaktorkern 2 zugeordneten Strömungskanals 6 verbunden. Der Zuströmbereich 38 und der Abströmbereich 40 ergeben sich dabei aus der Strömungsrichtung des Kühlmittels; bei einer Umkehr dieser Strömungsrichtung wechseln sie somit ihre Funktion. Jeder Zweigkanal 32, 34, 36 kommuniziert somit eingangsseitig mit dem Zuströmbereich 38 und ausgangsseitig mit dem Abströmbereich 40 des Strömungskanals 6. Durch eine derartige Ausgestaltung wird das im Strömungskanal 6 für eine ausreichende Kühlung des Reaktorkerns 2 vorgesehene und aufrechterhaltene Druckgefälle über den Reaktorkern 2 hinweg auch zur Aufrechterhaltung einer Durchströmung der Probenkammern 20, 22, 24 verwendet. Weitere aktive Komponenten zur Aufrechterhaltung einer derartigen Durchströmung sind somit nicht erforderlich.

Für die Ausgestaltung der Zweigkanäle 32, 34, 36 sind im Ausführungsbeispiel gemäß der Figur zur weiteren Verdeutlichung jeweils verschiedene Ausführungsformen vorgesehen. Selbstverständlich können alle oder mehrere der Zweigkanäle 32, 34, 36 aber auch in der Art einer einheitlichen Ausgestaltung nach demselben Ausführungskonzept ausgebildet sein.

Der Zweigkanal 34 umfaßt ein im wesentlichen den gesamten Reflektortank 4 seiner Länge nach durchdringendes Rohr 42, das in seinem Innenraum die Probenkammer 22 bildet. Im Gegensatz dazu sind die Zweigkanäle 32, 36 jeweils im wesentlichen zweiteilig ausgelegt. Dazu umfassen der Zweigkanal 32 und der Zweigkanal 36 jeweils in der Art eines ersten Teilstücks ein Rohrstück 44 bzw. 46, das in seinem Innenraum die jeweilige Probenkammer 20 bzw. 24 bildet. Die Rohrstücke 44, 46, aber auch das durchgehende Rohr 42 sind dabei jeweils in ihrem Innenquerschnitt für eine leichte Beschickbarkeit mit der jeweiligen Probe 26, 28 bzw. 30 an deren Auslegungsdimensionierung angepaßt und mit ihrem oberen Rand mit dem Deckelflansch 8 verbunden. Die Rohrstücke 44, 46 sind dabei jedoch topfartig ausgestaltet und von einer unteren Bodenplatte 48 bzw. 50 begrenzt, auf der die jeweilige Probe 26 bzw. 30 ruht. Die Rohrstücke 44, 46 sind dabei in der Art einer hängenden Anordnung am Deckelflansch 8 befestigt.

Die Strömungskanäle 32, 36 sind jeweils in der Art eines zweiten Teils durch eine der jeweiligen Probenkammer 20 bzw. 24 kühlmittelseitig nachgeschaltete Kühlmittelleitung 52 bzw. 54 vervollständigt. Die Kühlmittelleitungen 52, 54 sind dabei im Querschnitt im Vergleich zur jeweiligen Probenkammer 20, 24 verengt, so daß sich der Strömungsquerschnitt des jeweiligen Zweigkanals 32 bzw. 36 im wesentlichen durch den Querschnitt der Kühlmittelleitung 52 bzw. 54 ergibt. Über eine geeignete Wahl des Querschnitts der Kühlmittelleitung 52, 54 ist somit der jeweilige Zweigkanal 32 bzw. 36 hinsichtlich seiner Dimensionierung besonders günstig an den jeweiligen Kühlmittelbedarf anpaßbar. Sämtliche Zweigkanäle 32, 34, 36 sind dabei in ihrer Dimensionierung an einen im Auslegungsfall maximal zu erwartenden Kühlmittelbedarf der Proben 26, 28, 30 angepaßt.

Die Kühlmittelleitungen 52, 54 sind gekrümmt geführt. Dabei ist die Kühlmittelleitung 52 im wesentlichen für eine vertikal ausgerichtete Zu- und Abfuhr des Kühlmittels ausgelegt, weist jedoch in ihrem Mittenbereich in der Art einer Welle eine Krümmung auf. Im Gegensatz dazu ist die Kühlmittelleitung 54 für eine vertikale Zu- und eine horizontale Abfuhr des Kühlmittels ausgelegt und dazu entsprechend gekrümmt geführt. Durch die gekrümmte Ausgestaltung der Kühlmittelleitungen 52, 54 ist eine thermische und mechanische Entkopplung der jeweiligen Probenkammer 20 bzw. 24 vom Boden 10 des Reflektortanks 4 gewährleistet. Eine mechanische Verschiebung oder eine thermische Ausdehnung entsprechender Komponenten führt somit nicht zu mechanischen oder thermischen Verspannungen, so daß der Kernreaktor 1 besonders stabil betreibbar ist.

Ausgangsseitig (oder bei Strömungsumkehr eingangsseitig) münden die Zweigkanäle 32, 34, 36 in ein zwischen dem Tankboden 10 und dem Trägerflansch 12 geführtes Kanalsystem 56, das seinerseits kühlmittelseitig mit dem Abströmbereich 40 des Strömungskanals 6 verbunden ist. Das Kanalsystem 56 kann dabei eine Mehrzahl einzelner, beispielsweise nutenförmiger radialer Kanäle und/oder einen kreisförmigen oder Kreissegment förmigen Zwischenraum umfassen.

Jedem Zweigkanal 32, 34 ist jeweils ein einstellbares Drosselorgan 60, 62 bzw. 64 zugeordnet. Über das Drosselorgan 60, 62, 64 ist der Kühlmittelstrom durch den jeweiligen Zweigkanal 32, 34 bzw. 36 einstellbar und insbesondere an den individuellen Kühlbedarf der jeweiligen Probe 26, 28, 30 anpaßbar.

### Bezugszeichenliste

- 1: Kernreaktor
- 2: Reaktorkern
- 4: Reflektortank
- 6: Strömungskanal
- 8: Deckelflansch
- 10: Tankboden
- 12: Trägerflansch
- 14: Traggerüst
- 16: Boden
- 18: Wasserbecken
- 20, 22, 24: Probenkammern
- 26, 28, 30: Proben
- 32, 34, 36: Zweigkanal
- 38: Zuströmbereich
- 40: Abströmbereich
- 42: Rohr
- 44, 46: Rohrstücke
- 48, 50: untere Bodenplatte
- 52, 54: Kühlmittelleitung
- 56: Kanalsystem
- 60, 62, 64: Drosselorgan

## Patentansprüche

1. Kernreaktor (1) mit einem Reaktorkern (2), der in einem von einem Reflektortank (4) umgebenen Strömungskanal (6) für ein Kühlmittel angeordnet ist, **dadurch gekennzeichnet, dass** in den Reflektortank (4) eine Anzahl von Probenkammern (20, 22, 24) integriert ist, die jeweils über einen zugeordneten Zweigkanal (32, 34, 36) mit Kühlmittel bespeisbar sind, wobei der oder jeder Zweigkanal (32, 34, 36) eingangsseitig mit einem Zuströmbereich (38) und ausgangsseitig mit einem Abströmbereich (40) des Strömungskanals (6) kommuniziert.

2. Kernreaktor (1) nach Anspruch 1, dessen Reflektortank (4) mit einem Reflektormaterial, insbesondere mit schwerem Wasser (D₂O), befüllt ist.

3. Kernreaktor (1) nach Anspruch 1 oder 2, bei dem die Dimensionierung des oder jedes Zweigkanals (32, 34, 36) ausgangsseitig im Verhältnis zum Strömungskanal (6) und zur Pumpleistung einer diesem zugeordneten Kühlmittelpumpe an den maximal zu erwartenden Kühlmittelbedarf der jeweils vorgesehenen Probe (26, 28, 30) angepaßt ist.

4. Kernreaktor (1) nach einem der Ansprüche 1 bis 3, bei dem dem oder jedem Zweigkanal (32, 34, 36) jeweils ein einstellbares Drosselorgan (60, 62, 64) zugeordnet ist.

5. Kernreaktor (1) nach einem der Ansprüche 1 bis 4, bei dem der oder jeder Zweigkanal (32, 34, 36) jeweils eine der jeweiligen Probenkammer (20, 22, 24) kühlmittelseitig nachgeschaltete, im Querschnitt im Vergleich zur jeweiligen Probenkammer (20, 24) verengte Kühlmittelleitung (52, 54) umfasst.

6. Kernreaktor (1) nach Anspruch 5, bei dem die oder jede Kühlmittelleitung (54) gekrümmt geführt ist.

7. Verwendung eines Kernreaktors (1) nach einem der Ansprüche 1 bis 6 als Forschungs- oder als Versuchsreaktor.

## Claims

1. Nuclear reactor (1) with a reactor core (2) which is arranged in a flow passage (6) for a coolant that is surrounded by a reflector tank (4), **characterized in that** a number of sample chambers (20, 22, 24) are integrated in the reflector tank (4) and can each be fed coolant via an associated branch channel (32, 34, 36), the or each branch channel (32, 34, 36) communicating at the inlet side with an inflow region (38) and at the outlet side with an outflow region (40) of the flow passage (6).

2. Nuclear reactor (1) according to Claim 1, whose reflector tank (4) is filled with a reflector material, in particular heavy water (D₂O).

3. Nuclear reactor (1) according to Claim 1 or 2, in which the dimensions of the or each branch channel (32, 34, 36) are matched, at the outlet side, in relation to the flow passage (6) and to the pump power of a coolant pump associated therewith, to the maximum expected coolant requirement of the respectively provided sample (26, 28, 30).

4. Nuclear reactor (1) according to one of Claims 1 to 3, in which in each case one adjustable throttling member (60, 62, 64) is associated with the or each branch channel (32, 34, 36).

5. Nuclear reactor (1) according to one of Claims 1 to 4, in which the or each branch channel (32, 34, 36) comprises in each case one coolant line (52, 54) which is downstream, in terms of the coolant, of the respective sample chamber (20, 22, 24) and whose cross-section is narrower compared to the respective sample chamber (20, 24).

6. Nuclear reactor (1) according to Claim 5, in which the or each coolant line (54) is guided such that it is curved.

7. Use of a nuclear reactor (1) according to one of Claims 1 to 6 as a research or experimental reactor.

## Revendications

1. Réacteur (1) nucléaire comprenant un coeur (2) de réacteur, qui est disposé dans un canal (6) d'écoulement d'un fluide de refroidissement entouré d'une cuve (4) formant réflecteur, **caractérisé en ce qu'**il est intégré à la cuve (4) formant réflecteur un certain nombre de chambres (20, 22, 24) d'échantillon, qui peuvent être alimentées en fluide de refroidissement respectivement par un canal (32, 34, 36) associé en dérivation, le ou chaque canal (32, 34, 36) en dérivation communiquant, du côté de l'entrée, avec une partie (38) d'afflux et, du côté de la sortie, avec une partie (40) d'évacuation du canal (6) d'écoulement.

2. Réacteur (1) nucléaire sur revendication 1 dont la cuve (4) formant réflecteur est emplie d'une matière formant réflecteur, notamment d'eau lourde (D₂O).

3. Réacteur (1) nucléaire suivant la revendication 1 ou 2 dans lequel la dimension du ou de chaque canal (32, 34, 36) en dérivation est adaptée du côté de la sortie, par rapport au canal (6) d'écoulement et à la puissance de pompage d'une pompe du fluide de refroidissement qui lui est associée, au besoin maximum auquel on peut s'attendre en fluide de refroidissement de l'échantillon (26, 28, 30) prévu respectivement.

4. Réacteur (1) nucléaire suivant la revendication 3, dans lequel il est associé au ou à chaque canal (32, 34, 36) en dérivation, respectivement un organe (60, 62, 64) d'étranglement réglable.

5. Réacteur (1) nucléaire suivant la revendication 4, dans lequel le ou chaque canal (32, 34, 36) en dérivation comprend respectivement, un conduit (52, 54) de fluide de refroidissement qui est monté en aval du côté du fluide de refroidissement de chaque chambre (20, 22, 24) d'échantillon et qui est de section transversale rétrécie par rapport à chaque chambre (20, 24) d'échantillon.

6. Réacteur (1) nucléaire suivant la revendication 5, dans lequel le ou chaque conduit (54) pour du fluide de refroidissement est courbé.

7. Utilisation d'un réacteur (1) nucléaire suivant la revendication 6 comme réacteur d'étude ou comme réacteur d'essai.
